(19) Europäisches Patentamt
European Patent Office
Office européen des brevets

(11) EP 4 722 183 A1

(12) EUROPEAN PATENT APPLICATION
published in accordance with Art. 153(4) EPC

(43) Date of publication:
08.04.2026 Bulletin 2026/15

(51) International Patent Classification (IPC):
C04B 35/83 (2006.01)

(21) Application number: 24813773.9

(52) Cooperative Patent Classification (CPC):
C04B 35/52; C04B 35/622; C04B 35/83;
F16D 65/12

(22) Date of filing: 29.02.2024

(86) International application number:
PCT/CN2024/079242

(87) International publication number:
WO 2024/244567 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 CN 202310632065

(71) Applicant: BYD Company Limited
Shenzhen, Guangdong 518118 (CN)

(72) Inventors:
• LIN, Xinping
  Shenzhen, Guangdong 518118 (CN)
• YANG, Tao
  Shenzhen, Guangdong 518118 (CN)
• JIANG, Pinyi
  Shenzhen, Guangdong 518118 (CN)
• ZHAO, Shun
  Shenzhen, Guangdong 518118 (CN)

(74) Representative: Mathys & Squire
The Shard
32 London Bridge Street
London SE1 9SG (GB)

(54) **CARBON-CERAMIC BRAKE DISC AND MANUFACTURING METHOD THEREFOR, AND VEHICLE**

(57) A carbon-ceramic brake disc and a manufacturing method therefor, and a vehicle. The carbon-ceramic brake disc comprises long fiber layers and a short fiber layer; the long fiber layers are arranged on the two opposite sides of the short fiber layer; the fiber length S2 of the long fiber layers is greater than or equal to 60 mm, and the fiber length S1 of the short fiber layer is less than or equal to 30 mm.

FIG. 1

## Description

The application claims the priority to the Chinese patent application No. 202310632065.7 filed with China Patent Office on May 30, 2023, entitled "CARBON-CERAMIC BRAKE DISC AND MANUFACTURING METHOD THEREFOR, AND VEHICLE", the entire contents of which are incorporated herein by reference.

## FIELD

The present application relates to the technical field of brake discs, specifically to a carbon-ceramic brake disc and a manufacturing method therefor, and a vehicle.

## BACKGROUND

Currently, carbon-ceramic brake discs are classified into short-fiber carbon-ceramic discs and long-fiber carbon-ceramic discs. Short-fiber carbon-ceramic discs are common carbon-ceramic brake discs on the market, which are manufactured by a short fiber molding process and are widely adopted due to their low manufacturing cost.

However, the strength of short fiber reinforced materials is lower than that of long fiber reinforced materials. During braking, the surface area of the brake pad in contact with the carbon-ceramic brake disc is subjected to greater shear forces, so after long-term use, short fiber carbon-ceramic discs are prone to surface cracks. Long fiber carbon-ceramic discs exhibit superior overall mechanical performance, but their high manufacturing cost limits their broad application.

Therefore, how to provide a carbon-ceramic brake disc with superior overall mechanical performance and low manufacturing cost has become a key issue.

## SUMMARY

The purpose of this application is to provide a carbon-ceramic brake disc and a manufacturing method, and a vehicle, so as to solve the problems of poor mechanical properties and high cost of the brake disc.

To achieve the purpose of this application, the following technical solutions are provided.

In a first aspect, the present application provides a carbon-ceramic brake disc, including long fiber layers and a short fiber layer, wherein the long fiber layers are arranged on two opposite sides of the short fiber layer; a fiber length S2 of the long fiber layers is greater than or equal to 60 mm, and a fiber length S1 of the short fiber layer is less than or equal to 30 mm.

In one example, the fiber length S1 of the short fiber layer satisfies: 10 mm$\leq$S1$\leq$30 mm; and the fiber length S2 of the long fiber layers satisfies: 60 mm$\leq$S2$\leq$420 mm.

In one example, a ratio of a thickness H1 of the short fiber layer to a thickness H2 of any one of the long fiber layers satisfies: 4$\leq$H1/H2$\leq$64.

In one example, the ratio of the thickness H1 of the short fiber layer to the thickness H2 of any one of the long fiber layers satisfies: 15$\leq$H1/H2$\leq$30.

In one example, the long fiber layers include a first long fiber layer and a second long fiber layer, and a thickness of the first long fiber layer is the same as that of the second long fiber layer.

In one example, the thickness H2 of the long fiber layer ranges from 0.5 mm to 6 mm.

In one example, the thickness H1 of the short fiber layer ranges from 26 mm to 32 mm.

In one example, the short fiber layer includes short fibers, silicon carbide, carbon and silicon, wherein mass proportion of the short fibers is 30% to 60%, mass proportion of the silicon carbide is 30% to 50%, mass proportion of the carbon is 10% to 15%, and mass proportion of the silicon is 1% to 4%.

In one example, the long fiber layer includes long fibers, silicon carbide and silicon, wherein mass proportion of the long fibers is 15% to 30%, the mass proportion of the silicon carbide is 60% to 80%, and the mass proportion of the silicon is 2% to 10%.

In one example, the short fiber layer includes short fiber bundles, and a number of carbon fibers contained in the short fiber bundles is 1000 to 8000.

In one example, the long fiber layer includes long fiber bundles, and a number of carbon fibers contained in the long fiber bundles is 6000 to 12000.

In one example, the long fiber layer includes a plurality of long fiber sub-layers, and a thickness H21 of the long fiber sub-layers ranges from 0.15 mm to 0.5 mm.

In one example, a plurality of connecting holes are arranged on a top surface or a bottom surface of the carbon-ceramic brake disc.

In one example, a plurality of heat dissipation holes are arranged on the top surface or the bottom surface of the carbon-ceramic brake disc.

In a second aspect, the present application also provides a method for manufacturing a carbon-ceramic brake disc, including: carbon powder, phenolic resin powder, silicon carbide powder and short fiber bundles are mixed to obtain a short fiber mixture; silicon carbide particles and phenolic resin powder are mixed to obtain a coating slurry, which is applied to a surface of a long fiber cloth to obtain a coated long fiber cloth; and the short fiber mixture is disposed on a surface of the coated long fiber cloth, then cured and carbonized to obtain a carbon-ceramic brake disc. The carbon-ceramic brake disc includes long fiber layers and a short fiber layer, wherein the long fiber layers are arranged on two opposite sides of the short fiber layer, a fiber length of the long fiber layers is greater than a fiber length of the short fiber layer; and a ratio of a thickness H1 of the short fiber layer to a thickness H2 of any one of the long fiber layers satisfies: $4 \leq H1/H2 \leq 64$.

In one example, that carbon powder, phenolic resin powder, silicon carbide powder and short fiber bundles are mixed to obtain a short fiber mixture includes: the carbon powder, the phenolic resin powder, the silicon carbide powder and the short fiber bundles are placed into a solvent to disperse the carbon powder, the phenolic resin powder, the silicon carbide powder and the short fiber bundles, wherein the solvent is ethanol, methanol or pure water.

In one example, mass proportion of the carbon powder is 10% to 30%, mass proportion of the phenolic resin powder is 15% to 40%, mass proportion of the silicon carbide powder is 0.1% to 25%, and mass proportion of the short fibers is 30% to 50%.

In one example, that carbon powder, phenolic resin powder, silicon carbide powder and short fiber bundles are mixed to obtain a short fiber mixture includes: the carbon powder, the phenolic resin powder, the silicon carbide powder and the short fiber bundles are placed into a solvent, and the carbon powder, the phenolic resin powder, the silicon carbide powder and the short fiber bundles are dispersed by stirring for 2h to 5h.

In one example, that silicon carbide particles and phenolic resin powder are mixed to obtain a coating slurry includes: the silicon carbide particles and the phenolic resin powder are mixed into a solvent so that the silicon carbide particles and the phenolic resin powder are dispersed to obtain the coating slurry, and the solvent includes alcohol; wherein mass proportion of the silicon carbide particles is 30% to 50%, the mass proportion of the phenolic resin powder is 10% to 50%, and mass proportion of the alcohol is 30% to 40%.

In a third aspect, the present application further provides a vehicle, including a carbon-ceramic brake disc as described in any one of the examples of the first aspect.

The present application provides a carbon-ceramic brake disc comprising long fibers and short fibers. The carbon-ceramic brake disc includes long fiber layers and a short fiber layer, and the long fiber layers are arranged on the two opposite sides of the short fiber layer. Since the fiber length of the long fiber layers is greater than the fiber length of the short fiber layer, the contact area of the carbon-ceramic brake disc with the brake pad of the brake caliper corresponds to the long fiber layer. The long fiber layer can ensure that the contact area with the brake pad retains sufficient mechanical strength, thereby avoiding damage to the brake pad during long-term use. At the same time, by using a combination of long fibers and short fibers, the manufacturing method of using a single material (only long fibers or short fibers) in the prior art can be avoided, and the purpose of saving cost is achieved by reducing the use of long fibers.

## BRIEF DESCRIPTION OF THE DRAWINGS

In order to provide a clearer illustration of the examples of the present application or the technical solutions in the prior art, the drawings required for the examples or the description of the prior art will be briefly introduced below. Obviously, the drawings described below are only some examples of the present application. For those skilled in the art, other drawings can be obtained based on these drawings without any creative work.

FIG. 1 is a schematic diagram of an appearance structure of a carbon-ceramic brake disc according to an example;
FIG. 2 is a schematic diagram of a cross-sectional structure of a carbon-ceramic brake disc according to an example;
FIG. 3 is a schematic diagram of a top view of a carbon-ceramic brake disc according to an example;
FIG. 4 is a flow chart of manufacturing a carbon-ceramic brake disc according to an example;

Description of Figure numerals:

100-carbon-ceramic brake disc, 10-short fiber layer, 20-long fiber layer, 21-long fiber sublayer, 101-mounting hole, 102-connecting hole, 103-heat dissipation hole.

## DETAILED DESCRIPTION

In the following, a clear and complete describe of the technical solutions in the examples of the present application will be provided combining with the drawings in the examples of the present application. Obviously, the described examples are only part of the examples of the present application, not all of the examples. Based on the examples in the present application, all other examples obtained by those skilled in the art without creative work are within the scope of protection of this application.

It will be noted that when a component is referred to as "fixed to" another component, it can be directly on the other component or a central component can also be present. When a component is referred to as "connected to" another component, it can be directly connected to the other component or a central component may be present at the same time.

Unless otherwise defined, all technical and scientific terms used in this application have the same meaning as commonly understood by those skilled in the art to which this application belongs. The terms used in this application and in the specification are only for the purpose of describing specific examples and are not intended to limit this application. The term "and/or" used in this application includes any and all combinations of one or more of the related listed items.

Some examples of the present application are described in detail below with reference to the drawings. The following examples and features in the examples can be combined with each other without conflict.

Compared with existing metal brake discs, carbon-ceramic brake discs produce very little wear during friction, so carbon-ceramic brake discs have stronger wear resistance than metal brake discs, meaning that the service life of carbon-ceramic brake discs is longer than that of ordinary brake discs. In addition, metal brake discs also produce noise when being rubbed, but for carbon-ceramic brake discs, due to the characteristics of the material, there is usually no abnormal noise, which can ensure the quietness of the vehicle.

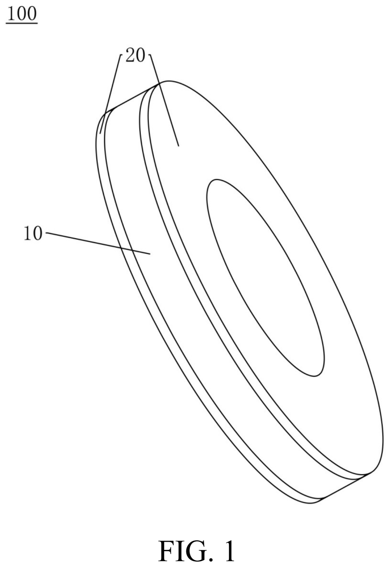

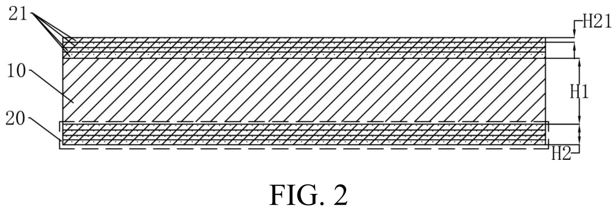

FIG. 1 is a schematic diagram of an appearance structure of a carbon-ceramic brake disc according to an example, and FIG. 2 is a schematic diagram of a cross-sectional structure of a carbon-ceramic brake disc according to an example.

In a first aspect, the present application provides a carbon-ceramic brake disc 100 referring to FIGS. 1 and 2, including long fiber layers 20 and a short fiber layer 10, wherein the long fiber layers 20 are arranged on the two opposite sides of the short fiber layer 10. The fiber length S1 of the short fiber layer 10 is less than 30 mm, and the fiber length S2 of the long fiber layers 20 is greater than 60 mm.

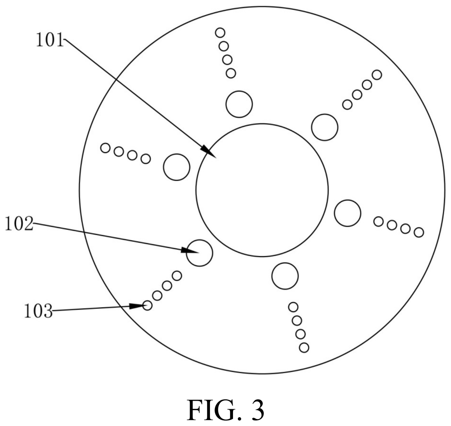

Specifically, the carbon-ceramic brake disc 100 may be disc-shaped. FIG. 3 is a schematic diagram of a top view of a carbon-ceramic brake disc according to an example. Referring to FIG. 3, a mounting hole 101 is arranged in the middle of the carbon-ceramic brake disc 100, which can be assembled with a power shaft after rotation. The carbon-ceramic brake disc 100 may include an axial direction and a radial direction, wherein the axial direction is the thickness direction of the carbon-ceramic brake disc 100, and the radial direction is the radius (diameter) direction on the disc surface.

In one example, the carbon-ceramic brake disc 100 is a three-layered structure, and the long fiber layers 20 are two layers, which are respectively arranged on the two opposite sides of the short fiber layer 10. The long fiber layer 20 may include long fibers, silicon carbide and silicon; the short fiber layer 10 may include short fibers, silicon carbide, carbon and silicon. The length of the long fibers is greater than that of the short fibers.

It will be understood that according to the working principle of the brake disc, during the process of tightening the brake disc to the brake caliper to stop the brake disc, the brake pad clamps the two opposite sides of the brake disc to stop the rotation of the brake disc. Therefore, arranging long fiber layers 20 on the two opposite sides of the carbon-ceramic brake disc 100 is beneficial for improving the strength of the contact area with the brake pad and preventing the brake disc from breaking under the action of high shear forces.

In one example, the thicknesses of the two long fiber layers 20 may be the same or different. For example, the two long fiber layers 20 may be respectively a first long fiber layer 20 and a second long fiber layer 20. The thickness of the first long fiber layer 20 may be H2A, the thickness of the second long fiber layer 20 may be H2B, and H2A≠H2B.

In one example, the thicknesses of the two long fiber layers 20 are the same. The thicknesses of the two long fiber layers 20 are set to be the same, so both sides of the short fiber layer 10 are clamped by the same amount of long fibers (the thicknesses of the two long fiber layers 20 are the same). Therefore, the forces transmitted to both sides of the short fiber layer 10 through the long fiber layers 20 are similar during braking, which can avoid damage caused by uneven force on both sides of the short fiber layer 10; at the same time, the thicknesses of the two long fiber layers 20 are the same, so the two long fiber layers 20 maintain similar thickness under the same wear amount, which can avoid the problem of damage caused by uneven force due to different wear amounts on both sides of the carbon-ceramic brake disc 100.

In one example, the fiber length S1 of the short fiber layer satisfies: 10 mm≤S1≤30 mm; the fiber length S2 of the long fiber layers satisfies: 60 mm≤S2≤420 mm. Controlling the length of the short fibers and the long fibers within the above range can not only ensure the mechanical properties of the carbon-ceramic brake disc 100, but also reduce the difficulty of process manufacturing. It will be understood that when the length of the long fibers or the short fibers exceeds the above range, the shorter fibers will increase the difficulty of processing, which is not conducive to industrial manufacturing; and the longer fibers cannot function as the short fibers, resulting in insufficient mechanical properties of the carbon-ceramic brake disc 100.

The present application provides a carbon-ceramic brake disc 100 comprising long fibers and short fibers. The carbon-ceramic brake disc 100 includes long fiber layers 20 and a short fiber layer 10, and the long fiber layers 20 are arranged on the two opposite sides of the short fiber layer 10. Since the fiber length of the long fiber layers 20 is greater than the fiber length of the short fiber layer 10, the contact area of the carbon-ceramic brake disc 100 with the brake pad of the brake caliper corresponds to the long fiber layer 20. The long fiber layer 20 can ensure that the contact area with the brake pad retains sufficient mechanical strength, thereby avoiding damage to the brake pad during long-term use. At the same time, by using a combination of long fibers and short fibers, the manufacturing method of using a single material (only long fibers or short fibers) in the prior art can be avoided, and the purpose of saving cost is achieved by reducing the use of long fibers.

In one example, the ratio of the thickness H1 of the short fiber layer 10 to the thickness H2 of each long fiber layers 20 satisfies: $4 \leq H1/H2 \leq 64$. Specifically, H1/H2 can be 4, 6, 10, 15, 20, 25, 30, 35, 40, 45, 50, 55, 60 or 64. When the above relationship is satisfied, the thickness of the short fiber layer 10 can be greater than the thickness of the long fiber layer 20, it means that the proportion of the short fiber layer 10 is larger in the carbon-ceramic brake disc 100. The advantage of this design is ensuring that the outermost layer can be protected by the long fiber layers 20, thereby enhancing the strength of the carbon-ceramic brake disc 100, and also reducing the difficulty of manufacturing the carbon-ceramic brake disc 100, thereby saving costs. When the thickness ratio of the two is lower than the lower limit of the above relationship, it means that the thickness of the short fiber layer 10 is relatively thin, which is not conducive to reducing the cost of the carbon-ceramic brake disc 100, and the difficulty of manufacturing is increased. When the thickness ratio of the two is higher than the upper limit of the above relationship, it means that the thickness of the long fiber layers 20 is relatively thin, and the carbon-ceramic brake disc 100 cannot achieve the effect of strength enhancement through the long fiber layers 20.

In one example, the ratio of the thickness H1 of the short fiber layer 10 to the thickness H2 of each long fiber layers 20 satisfies: $15 \leq H1/H2 \leq 30$.

The present application also provides that the thickness of the short fiber layer 10 is greater than the thickness of the long fiber layer 20 to satisfy the range of the above-mentioned relationship, so that while ensuring that the long fiber layers 20 can play a sufficient role, the manufacturing cost of the carbon-ceramic brake disc 100 is reduced by setting the thickness of the short fiber layer 10, thereby improving the performance of the carbon-ceramic brake disc 100 and saving its manufacturing cost. Therefore, the carbon-ceramic brake disc 100 provided by the present application has extremely high commercial value.

In one example, the thickness H1 of the short fiber layer 10 ranges from 26 mm to 32 mm. Specifically, the thickness H1 of the short fiber layer 10 may be, but is not limited to, 26 mm, 27 mm, 28 mm, 29 mm, 30 mm, 31 mm or 32 mm.

In one example, the thickness H2 of the long fiber layer 20 ranges from 0.5 mm to 6 mm. Specifically, the thickness H2 of the long fiber layer 20 can be, but is not limited to, 0.5 mm, 1 mm, 1.5 mm, 2 mm, 2.5 mm, 3 mm, 3.5 mm, 4 mm, 4.5 mm, 5 mm, 5.5 mm or 6 mm.

In one example, the short fiber layer 10 includes short fibers, silicon carbide, carbon and silicon, wherein the mass proportion of the short fibers is 30% to 60%, the mass proportion of the silicon carbide is 30% to 50%, the mass proportion of the carbon is 10% to 15%, and the mass proportion of the silicon is 1% to 4%. By controlling the mass proportion of each substance in the short fiber layer 10 within the above range, the short fiber layer 10 maintains relatively excellent performance (including mechanical properties and thermal properties). It will be understood that when the proportion of the short fibers or the silicon carbide exceeds the above range, the mass proportion of the carbon fibers and the mass proportion of the ceramics will be unevenly matched, resulting in poor matching between the carbon fibers and the ceramics, thereby causing the performance of the short fiber layer 10 to decrease.

In one example, the long fiber layer 20 includes long fibers, silicon carbide, and silicon, wherein the mass proportion of the long fibers is 15% to 30%, the mass proportion of the silicon carbide is 60% to 80%, and the mass proportion of the silicon is 2% to 10%. By controlling the mass proportion of each substance in the long fiber layer 20 within the above range, the long fiber layer 20 maintains relatively excellent performance (including mechanical properties and thermal properties). It will be understood that when the proportion of the short fibers or the silicon carbide exceeds the above range, the mass proportion of the carbon fibers and the mass proportion of the ceramics will be unevenly matched, resulting in poor matching between the carbon fibers and the ceramics, thereby causing the performance of the long fiber layer 20 to decrease.

In one example, the short fiber layer 10 includes short fiber bundles, and the number of carbon fibers contained in the short fiber bundles is 1000 to 8000. Specifically, the number of carbon fibers contained in the short fiber bundles can be, but is not limited to, 1000, 1500, 2000, 2500, 3000, 3500, 4000, 4500, 5000, 5500, 6000, 6500, 7000, 7500, 7500 or 8000. By setting the number of carbon fibers contained in the short fiber bundles within the above range, it is ensured that the short fiber bundles can provide strong mechanical properties, and the thickness and density of the short fiber layer 10 are reasonably controlled. It will be understood that when the number of carbon fibers contained in the short fiber bundles is less than the above range, the short fiber bundles cannot distribute the force to more carbon fibers, resulting in a reduction in the force that the short fiber bundles can bear, thereby affecting the mechanical properties of the short fiber layer 10; and when the number of carbon fibers contained in the short fiber bundles is greater than the above range, the short fiber layer 10 will be too thick, and the density of the short fiber layer 10 at the short fiber bundles will also increase.

In one example, the long fiber layer 20 includes long fiber bundles, and the number of carbon fibers contained in the long fiber bundles is 6000 to 12000. Specifically, the number of carbon fibers contained in the long fiber bundles may be, but is not limited to, 6000, 6500, 7000, 7500, 8000, 8500, 9000, 9500, 10000, 10500, 11000, 11500 or 12000. By setting the number of carbon fibers contained in the long fiber bundles within the above range, it is ensured that the long fiber bundles can provide strong mechanical properties, and the thickness and density of the long fiber layer 20 are reasonably controlled. It will be understood that when the number of carbon fibers in the long fiber bundles is less than the above range, the long fiber bundles cannot distribute the force to more carbon fibers, resulting in a reduction in the force that the long fiber bundles can bear, thereby affecting the mechanical properties of the long fiber layer 20; and when the number of carbon fibers in the long fiber bundles is greater than the above range, the long fiber layer 20 will be too thick, and the density of the long fiber layer 20 at the long fiber bundles will also increase.

Referring to FIG. 2, in one example, the long fiber layer 20 includes a plurality of long fiber sublayers 21. The thickness H21 of the long fiber sublayer 21 ranges from 0.15 mm to 0.5 mm. Specifically, the long fiber layer 20 can comprise a plurality of long fiber sublayers 21 stacked in sequence along the axial direction of the brake disc and finally combined to form the long fiber layer 20. Therefore, the final thickness of the long fiber layer 20 should be the sum of the thicknesses of the plurality of long fiber sublayers 21.

In one example, a plurality of ventilation channels (not shown) are arranged on the outer peripheral wall of the carbon-ceramic brake disc 100. Specifically, a plurality of ventilation channels are radially arranged on the side wall of the carbon-ceramic brake disc 100, and the plurality of ventilation channels are evenly distributed along the circumference.

In one example, the ventilation channel may be enclosed by the long fiber layers 20 and the short fiber layer 10. For example, the ventilation channel may extend radially from the short fiber layer 10 toward the center of the carbon-ceramic brake disc 100. The opening width of the ventilation channel in the axial direction may be the thickness of the short fiber layer 10, so the ventilation channel is enclosed by the short fiber layer 10 in the circumferential direction of the carbon-ceramic brake disc 100 and by the long fiber layers 20 in the axial direction.

Referring to FIG. 3, in one example, a plurality of connecting holes 102 are formed through the top surface (or bottom surface) of the carbon-ceramic brake disc 100. The connecting holes 102 can be used for screws to pass through and then be fixed to the axle. The plurality of connecting holes 102 can be arranged in a circular array.

Referring to FIG. 3, in one example, a plurality of heat dissipation holes 103 are also formed through the top surface (or bottom surface) of the carbon-ceramic brake disc 100. The heat dissipation holes 103 can enable the carbon-ceramic brake disc 100 to release more heat during braking, thereby achieving better heat dissipation. The plurality of connection holes 102 can be arranged in a circular array with multiple circles.

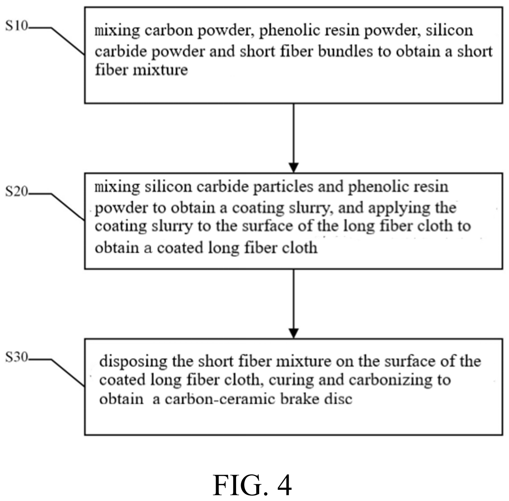

FIG. 4 is a flow chart of manufacturing a carbon-ceramic brake disc according to an example.

In a second aspect, the present application also provides a method for manufacturing a carbon-ceramic brake disc, referring to FIG. 4, including the following steps:

Step S10, mixing carbon powder, phenolic resin powder, silicon carbide powder and short fiber bundles to obtain a short fiber mixture.
Step S20, mixing silicon carbide particles and phenolic resin powder to obtain a coating slurry, and applying the coating slurry to the surface of the long fiber cloth to obtain a coated long fiber cloth.
Step S30, disposing the short fiber mixture on the surface of the long fiber cloth, curing and carbonizing to obtain a carbon-ceramic brake disc.

The carbon-ceramic brake disc includes long fiber layers and a short fiber layer. Long fiber layers are arranged on the two opposite sides of the short fiber layer. The fiber length of the long fiber layers is greater than the fiber length of the short fiber layer. The ratio of the thickness H1 of the short fiber layer to the thickness H2 of each long fiber layer satisfies: $4 \leq H1/H2 \leq 64$.

In one example, in step S10, the carbon powder, the phenolic resin powder, the silicon carbide powder and the short fiber bundles may be placed in a solvent so that the four may be dispersed. Optionally, the solvent may include but is not limited to ethanol, methanol, purified water, and the like.

In one example, in step S10, the mass proportion of the carbon powder may be 10% to 30%, the mass proportion of the resin powder may be 15% to 40%, the mass proportion of the silicon carbide powder may be 0.1% to 25%, and the mass proportion of the short fibers may be 30% to 50%.

In one example, in step S10, the carbon powder, the phenolic resin powder, the silicon carbide powder and the short fiber bundles are placed in a solvent, and the four can be dispersed by stirring, and the stirring time can be 2h to 5h.

In one example, in step S10, the mixed liquid may be heated until the solvent evaporates, thereby obtaining a dry mixed material.

In one example, in step S10, the short fiber bundles bonded in the dry mixture may be separated to obtain a short fiber mixture.

In one example, in step S20, the silicon carbide particles and the phenolic resin powder may be placed in a solvent so that the two can be dispersed to obtain a coating slurry. Optionally, the solvent may include but is not limited to ethanol, methanol, purified water, and the like.

In one example, in step S20, the mass proportion of the silicon carbide particles may be 30% to 50%, the mass proportion of the phenolic resin powder may be 10% to 50%, and the mass proportion of the alcohol may be 30% to 40%.

In one example, in step S20, after the coating slurry is applied to the surface of the long fiber cloth, the coated long fiber cloth can be placed in an oven to dry the solvent in the coating slurry, and then the coated long fiber cloth is obtained.

In one example, in step S30, the long fiber cloth can be cut into a shape corresponding to the mold, and then placed at the bottom of the mold, and then the short fiber mixture is filled on the long fiber cloth, and then the long fiber cloth is placed on the short fiber mixture. In this way, the precursor in the mold can have a three-layered structure.

In one example, in step S30, one or more layers of coated long fiber cloth may be placed at the bottom of the mold. It will be understood that since the thickness of one layer of the coated long fiber cloth cannot meet the thickness of the final long fiber layer, multiple layers of coated long fiber cloth may be stacked so that each layer of coated long fiber cloth can form a long fiber sublayer.

In one example, in step S30, the obtained precursor can be cured by high temperature and pressure, wherein the heating temperature is 130°C to 180°C, and the pressure is 5 MPa to 30 MPa.

In one example, in step S30, the carbonizing temperature may be 800°C to 1200°C and the temperature may be kept for 2h to 4h. After carbonizing, a brake disc blank may be obtained.

In one example, in step S30, the obtained brake disc blank can be post-processed to obtain a carbon-ceramic blank. The post-processing includes removing burrs and machining heat dissipation holes, and also includes liquid phase siliconization treatment of the blank to obtain a carbon-ceramic blank.

In one example, the desired carbon-ceramic brake disc can be finally obtained by machining the surface and side surfaces of the carbon-ceramic blank.

The carbon-ceramic brake disc manufactured by the above means includes long fiber layers and a short fiber layer, and the long fiber layers are arranged on the two opposite sides of the short fiber layer. Since the fiber length of the long fiber layers is greater than the fiber length of the short fiber layer, the contact area of the carbon-ceramic brake disc with the brake pad of the brake caliper corresponds to the long fiber layer. The long fiber layer can ensure that the contact area with the brake pad retains sufficient mechanical strength, thereby avoiding damage to the brake pad during long-term use. At the same time, the present application also provides that the thickness of the short fiber layer is greater than the thickness of the long fiber layer, so that while ensuring that the long fiber layers can effectively fulfill its intended role, the manufacturing cost of the carbon-ceramic brake disc is reduced by setting the thickness of the short fiber layer, thereby improving the performance of the carbon-ceramic brake disc and saving its manufacturing cost. Therefore, the carbon-ceramic brake disc provided by the present application has extremely high commercial value.

In a third aspect, the present application further provides a vehicle, including the carbon-ceramic brake disc described in the first aspect. The vehicle using the carbon-ceramic brake disc not only has excellent braking performance, but also can save the cost of replacing the brake disc of the vehicle in the later stage due to the longer service life of the carbon-ceramic brake disc, thereby reducing the manufacturing cost of the vehicle and saving the cost of vehicle maintenance in the later stage.

The technical solution of the present invention is described in detail below through specific examples.

Example 1

(1) carbon powder, phenolic resin powder, silicon carbide powder and short fiber bundles are mixed with a certain amount of alcohol and dispersed by stirring for 2 hours; the mass proportion of the carbon powder is 15%, the mass proportion of the resin powder is 30%, the mass proportion of the silicon carbide powder is 15%, and the mass proportion of the short fibers is 40%;

(2) after stirring for 2h, the stirred mixture is heated until the alcohol is completely evaporated;

(3) the short fiber bundles bonded in the dried mixture is separated to obtain a short fiber mixture;

(4) silicon carbide particles and phenolic resin powder are mixed with alcohol to obtain a coating slurry, wherein the mass proportion of the silicon carbide particles is 35%, the mass proportion of the phenolic resin powder is 35%, and the mass proportion of the alcohol is 30%;

(5) the coating slurry is applied on the surface of the long-fiber cloth, and the cloth is placed in an oven at 60°C to completely dry the alcohol, thereby the coated long-fiber cloth is obtained;

(6) one or more layers of coated long fiber cloth are cut into a shape corresponding to the mold, the coated long fiber cloth is placed on the bottom of the mold, then the short fiber mixture is filled into the mold, and then one or more layers of coated long fiber cloth are placed on the short fiber mixture;

(7) cured at 150°C with a pressure of 10 MPa;

(8) the solidified blank is placed into a carbonizing furnace to carbonize at a temperature of 1000°C for 3h;

(9) the burrs are removed from the carbonized blank and heat dissipation holes are processed;

(10) the carbonized blank is subjected to liquid phase siliconization treatment to obtain a carbon-ceramic blank; the surface and side surfaces are mechanically processed to obtain the desired carbon-ceramic brake disc.

The carbon-ceramic brake disc obtained in this example includes long fiber layers and a short fiber layer, and the long fiber layers are arranged on the two opposite sides of the short fiber layer. The thickness of the short fiber layer is 30 mm, and the thickness of the long fiber layer is 3 mm. The fiber length of the long fiber layers is 60 mm, and the fiber length of the short fiber layer is 30 mm.

Example 2

The difference from Example 1 is that the fiber length of the long fiber layers is 420 mm; and the fiber length of the short fiber layer is 10 mm.

Example 3

The difference from Example 1 is that the thickness of the short fiber layer is 27 mm, and the thickness of the long fiber layer is 1.5 mm.

Example 4

The difference from Example 1 is that the thickness of the short fiber layer is 20 mm, and the thickness of the long fiber layer is 6 mm.

Example 5

The difference from Example 1 is that the thickness of the short fiber layer is 32 mm, and the thickness of the long fiber layer is 0.4 mm.

Comparative Example 1

The carbon-ceramic brake disc only includes short fiber layers and doesn't include long fiber layers.

Comparative Example 2

The difference from Example 1 is that the fiber length of the long fiber layers is 55 mm; and the fiber length of the short fiber layer is 32 mm.

Performance test: The flexural strength is tested using a three-bar bending device, the compressive strength is tested using a compressive strength tester, and the impact toughness is measured using an impact toughness tester. The standards: flexural strength>120MPa, compressive strength>240MPa, and impact toughness>20KJ/m$^2$. Table 1 is a statistical table of the performance tests of the carbon-ceramic brake discs provided by Examples 1 to 5 and Comparative Examples 1 to 2.

Table 1

|                        | flexural strength | compressive strength | impact toughness       |
| ---------------------- | ----------------- | -------------------- | ---------------------- |
| Example 1              | 142MPa            | 296MPa               | 28.6KJ/m$^2$           |
| Example 2              | 167MPa            | 301MPa               | 30.2KJ/m$^2$           |
| Example 3              | 152MPa            | 322MPa               | 32.7KJ/m$^2$           |
| Example 4              | 126MPa            | 267MPa               | 27.5KJ/m$^2$           |
| Example 5              | 121MPa            | 242MPa               | 25.2KJ/m$^2$           |
| Comparative Example 1  | 86MPa             | 226MPa               | 18.6KJ/m$^2$           |
| Comparative Example 2  | 116MPa            | 232MPa               | 21.2 KJ/m$^2$          |

It can be seen from the test data of Examples 1 to 5 and Comparative Examples 1 to 2 in Table 1 that the carbon-ceramic brake discs provided by the present application all have excellent mechanical properties. And from Example 1 and Comparative Example 1, it can be seen that the mechanical properties of the carbon-ceramic brake discs provided by the present application are better than those of conventional carbon-ceramic brake discs on the market. And from the carbon-ceramic brake disc of Comparative Example 2, it can be seen that the advantages of the performance of the carbon-ceramic brake disc can only be guaranteed when the lengths of the long fibers and the short fibers are within the range provided by the present application.

It can be seen from the test data of Examples 1 to 3 in Table 1 that when the thickness ratio of the short fiber layer to the long fiber layer meets the range provided in the present application, the mechanical properties of the carbon-ceramic brake disc can be further improved. This is because the thickness ratio of the short fiber layer to the long fiber layer is set within the optimal range, so that the mechanical transfer of the outer long fibers to the core short fibers can be optimized.

In the description of the examples of the present application, it should be noted that the orientation or positional relationship of terms such as "center", "up", "down", "left", "right", "vertical", "horizontal", "inside" and "outside" are based on the orientation or positional relationship described in the accompanying drawings, and are only for the convenience of describing the present application and simplifying the description, and do not indicate or imply that the referred device or element must have a specific orientation, be constructed and operated in a specific orientation, and therefore will not be understood as a limitation on the present application.

What is disclosed above is only a preferred example of the present application, and it certainly cannot be used to limit the scope of rights of the present application. Ordinary technicians in this field can understand that all or part of the processes of implementing the above example and equivalent changes made according to the claims of the present application are still within the scope covered by the present application.

## Claims

1. A carbon-ceramic brake disc (100), comprising long fiber layers (20) and a short fiber layer (10), wherein the long fiber layers (20) are arranged on two opposite sides of the short fiber layer (10); a fiber length S1 of the short fiber layer (10) is less than or equal to 30 mm, and a fiber length S2 of the long fiber layers (20) is greater than or equal to 60 mm.

2. The carbon-ceramic brake disc (100) according to claim 1, wherein the fiber length S1 of the short fiber layer (10) satisfies: $10 \text{ mm} \leq S1 \leq 30 \text{ mm}$; and the fiber length S2 of the long fiber layers (20) satisfies: $60 \text{ mm} \leq S2 \leq 420 \text{ mm}$.

3. The carbon-ceramic brake disc (100) according to claim 1 or 2, wherein a ratio of a thickness H1 of the short fiber layer (10) to a thickness H2 of any one of the long fiber layers (20) satisfies:

$$4 \leq H1/H2 \leq 64.$$

4. The carbon-ceramic brake disc (100) according to claim 3, wherein the ratio of the thickness H1 of the short fiber layer (10) to the thickness H2 of any one of the long fiber layers (20) satisfies:

$$15 \leq H1/H2 \leq 30.$$

5. The carbon-ceramic brake disc (100) according to any one of claims 1 to 4, wherein the long fiber layer (20) comprises a first long fiber layer and a second long fiber layer, and a thickness of the first long fiber layer is the same as that of the second long fiber layer.

6. The carbon-ceramic brake disc (100) according to any one of claims 1 to 5, wherein the thickness H2 of the long fiber layers (20) ranges from 0.5 mm to 6 mm.

7. The carbon-ceramic brake disc (100) according to any one of claims 1 to 6, wherein the thickness H1 of the short fiber layer (10) ranges from 26 mm to 32 mm.

8. The carbon-ceramic brake disc (100) according to any one of claims 1 to 7, wherein the short fiber layer (10) comprises short fibers, silicon carbide, carbon and silicon, in which mass proportion of the short fibers is 30% to 60%, mass proportion of the silicon carbide is 30% to 50%, mass proportion of the carbon is 10% to 15%, and mass proportion of the silicon is 1% to 4%.

9. The carbon-ceramic brake disc (100) according to any one of claims 1 to 8, wherein the long fiber layer (20) comprises long fibers, silicon carbide and silicon, in which mass proportion of the long fibers is 15% to 30%, the mass proportion of the silicon carbide is 60% to 80%, and the mass proportion of the silicon is 2% to 10%.

10. The carbon-ceramic brake disc (100) according to any one of claims 1 to 9, wherein the short fiber layer (10) comprises short fiber bundles, and a number of carbon fibers in the short fiber bundles is 1000 to 8000.

11. The carbon-ceramic brake disc (100) according to any one of claims 1 to 10, wherein the long fiber layer (20) comprises long fiber bundles, and a number of carbon fibers in the long fiber bundles is 6000 to 12000.

12. The carbon-ceramic brake disc (100) according to any one of claims 1 to 11, wherein the long fiber layer (20) comprises a plurality of long fiber sub-layers (21), and a thickness H21 of the long fiber sub-layer (21) ranges from 0.15 mm to 0.5 mm.

13. The carbon-ceramic brake disc (100) according to any one of claims 1 to 12, wherein a plurality of connecting holes (102) are arranged on a top surface or a bottom surface of the carbon-ceramic brake disc (100).

14. The carbon-ceramic brake disc (100) according to any one of claims 1 to 13, wherein a plurality of heat dissipation holes (103) are arranged on the top surface or the bottom surface of the carbon-ceramic brake disc (100).

15. A method for manufacturing a carbon-ceramic brake disc (100), comprising:

mixing carbon powder, phenolic resin powder, silicon carbide powder and short fiber bundles to obtain a short fiber mixture;
mixing silicon carbide particles and phenolic resin powder to obtain a coating slurry, and applying the coating slurry to a surface of the long fiber cloth to obtain a coated long fiber cloth;
disposing the short fiber mixture on a surface of the coated long fiber cloth, curing and carbonizing to obtain a carbon-ceramic brake disc (100);
wherein the carbon-ceramic brake disc (100) comprising long fiber layers (20) and a short fiber layer (10), the long fiber layers (20) are arranged on two opposite sides of the short fiber layer (10), a fiber length of the long fiber layers (20) is greater than a fiber length of the short fiber layer (10); and a ratio of a thickness H1 of the short fiber layer (10) to a thickness H2 of any one of the long fiber layers (20) satisfies: $4 \leq H1/H2 \leq 64$.

16. The method for manufacturing a carbon-ceramic brake disc (100) according to claim 15, wherein the step of mixing carbon powder, phenolic resin powder, silicon carbide powder and short fiber bundles to obtain a short fiber mixture comprises:
placing the carbon powder, the phenolic resin powder, the silicon carbide powder and the short fiber bundles into a solvent to disperse the carbon powder, the phenolic resin powder, the silicon carbide powder and the short fiber bundles, and the solvent is ethanol, methanol or purified water.

17. The method for manufacturing a carbon-ceramic brake disc (100) according to claim 15 or 16, wherein mass proportion of the carbon powder is 10% to 30%, mass proportion of the phenolic resin powder is 15% to 40%, mass proportion of the silicon carbide powder is 0.1% to 25% and content of the short fibers is 30% to 50%.

18. The method for manufacturing a carbon-ceramic brake disc (100) according to any one of claims 15 to 17, wherein the step of mixing carbon powder, phenolic resin powder, silicon carbide powder and short fiber bundles to obtain a short fiber mixture comprises:
placing the carbon powder, the phenolic resin powder, the silicon carbide powder and the short fiber bundles into a solvent, and the carbon powder, the phenolic resin powder, the silicon carbide powder and the short fiber bundles are dispersed by stirring for 2h to 5h.

19. The method for manufacturing a carbon-ceramic brake disc (100) according to any one of claims 15 to 18, wherein the step of mixing silicon carbide particles and phenolic resin powder to obtain a coating slurry comprises:

placing the silicon carbide particles and the phenolic resin powder into a solvent so that the silicon carbide particles and the phenolic resin powder are dispersed to obtain the coating slurry, and the solvent comprises alcohol;
wherein mass proportion of the silicon carbide particles is 30% to 50%, the mass proportion of the phenolic resin powder is 10% to 50%, and mass proportion of the alcohol is 30% to 40%.

**20.** A vehicle, comprising a carbon-ceramic brake disc (100) according to any one of claims 1 to 14.

100

20

10

FIG. 1

FIG. 2

FIG. 3

| S10 | mixing carbon powder, phenolic resin powder, silicon carbide powder and short fiber bundles to obtain a short fiber mixture |

| S20 | mixing silicon carbide particles and phenolic resin powder to obtain a coating slurry, and applying the coating slurry to the surface of the long fiber cloth to obtain a coated long fiber cloth |

| S30 | disposing the short fiber mixture on the surface of the coated long fiber cloth, curing and carbonizing to obtain a carbon-ceramic brake disc |

FIG. 4

## INTERNATIONAL SEARCH REPORT

| International application No. |
|---|
| **PCT/CN2024/079242** |

### A. CLASSIFICATION OF SUBJECT MATTER

C04B35/83(2006.01)i

According to International Patent Classification (IPC) or to both national classification and IPC

### B. FIELDS SEARCHED

Minimum documentation searched (classification system followed by classification symbols)

IPC:C04B

Documentation searched other than minimum documentation to the extent that such documents are included in the fields searched

Electronic data base consulted during the international search (name of data base and, where practicable, search terms used)

CNABS, CNTXT, DWPI, ENTXT, VEN, CNKI, wiley interScience: 刹车盘, 长纤维, 层, 短纤维, 长度, 厚度, 碳化硅, 硅, 碳, 孔, 散热, 连接, 酚醛树脂, brake disc, long fiber, layer, short fiber, length, thickness, silicon carbide, Si, C, SiC, silicon, hole, heat dissipation, connection, phenolic resin

### C. DOCUMENTS CONSIDERED TO BE RELEVANT

| Category* | Citation of document, with indication, where appropriate, of the relevant passages | Relevant to claim No. |
|---|---|---|
| X | CN 115823151 A (XI'AN CHAOMA TECHNOLOGY CO., LTD.) 21 March 2023 (2023-03-21) claims 1-4, and description, paragraphs 9-14 | 1-20 |
| A | CN 113502606 A (ZHEJIANG XINGHUI NEW MATERIAL TECHNOLOGY CO., LTD.) 15 October 2021 (2021-10-15) entire document | 1-20 |
| A | DE 102006057939 A1 (AUDI AG) 12 June 2008 (2008-06-12) entire document | 1-20 |
| A | DE 10157583 C1 (SGL CARBON AG) 19 December 2002 (2002-12-19) entire document | 1-20 |
| A | CN 113833784 A (GUIZHOU ZIAN NEW MATERIAL TECHNOLOGY CO., LTD.) 24 December 2021 (2021-12-24) entire document | 1-20 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 April 2024** | **10 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/079242** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113847365 A (HUNAN SHIXIN NEW MATERIAL CO., LTD.) 28 December 2021 (2021-12-28)<br>    entire document | 1-20 |

## INTERNATIONAL SEARCH REPORT
### Information on patent family members

International application No.

**PCT/CN2024/079242**

| Patent document cited in search report | | | Publication date (day/month/year) | Patent family member(s) | | | Publication date (day/month/year) |
|---|---|---|---|---|---|---|---|
| CN | 115823151 | A | 21 March 2023 | None | | | |
| CN | 113502606 | A | 15 October 2021 | None | | | |
| DE | 102006057939 | A1 | 12 June 2008 | US | 2008138578 | A1 | 12 June 2008 |
| | | | | US | 9005732 | B2 | 14 April 2015 |
| | | | | EP | 1930619 | A2 | 11 June 2008 |
| | | | | EP | 1930619 | A3 | 03 June 2009 |
| | | | | EP | 1930619 | B1 | 11 January 2017 |
| DE | 10157583 | C1 | 19 December 2002 | JP | 2003166573 | A | 13 June 2003 |
| | | | | DE | 50213679 | D1 | 27 August 2009 |
| | | | | EP | 1314907 | A1 | 28 May 2003 |
| | | | | EP | 1314907 | B1 | 15 July 2009 |
| | | | | US | 2003106751 | A1 | 12 June 2003 |
| | | | | US | 6926127 | B2 | 09 August 2005 |
| CN | 113833784 | A | 24 December 2021 | None | | | |
| CN | 113847365 | A | 28 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310632065